# FASCICULE DE BREVET EUROPEEN

(11) **EP 1 294 164 B1**
(45) Date de publication et mention de la délivrance du brevet: **10.05.2006**
(21) Numéro de dépôt: 02292196.9
(22) Date de dépôt: 06.09.2002
(51) Int. Cl.: H04M 3/493

(54) **Navigation adaptative dans un système vocal interactif**
Adaptieve Navigation in einer Sprachantwortsystem
Self adapting navigation in an interactive voice response system

(30) Priorité: 14.09.2001 FR 0111931
(43) Date de publication de la demande: 19.03.2003
(73) Titulaire: Société Française du Radiotéléphone-SFR, 75008 Paris (FR)
(72) Inventeur: Foucher, Albert, 78000 Versailles (FR)
(74) Mandataire: Debay, Yves

(56) Documents cités:
- EP-A- 0 697 780
- DE-C- 19 956 747
- US-A- 6 144 938

## Description

La présente invention concerne un procédé de navigation adaptative dans un système vocal interactif, un système de navigation vocale interactif et l'utilisation de ce système vocal.

Un système de navigation vocale est de manière connue employé dans le domaine de la téléphonie mobile. En effet, un utilisateur disposant d'un terminal mobile se trouvant dans la cellule radio d'une station de base, peut accéder à partir de son terminal à un ou plusieurs services vocaux. Suivant son désir, l'utilisateur peut être mis en communication directe avec une personne physique, appelée télé-acteur, ou avec un système vocal interactif. Ces systèmes vocaux interactifs permettent à l'utilisateur de naviguer entre des services personnalisés par exemple en sélectionnant des touches sur le clavier de son terminal mobile. L'utilisateur peut demander à consulter sa dernière facture, à changer son forfait ou à consulter immédiatement un télé-acteur pour disposer d'un renseignement ou effectuer un changement impossible via le clavier de son terminal mobile. Il existe d'autres systèmes de navigation vocale qui permettent de réagir et de répondre directement aux interrogations des utilisateurs sans qu'il soit nécessaire de recourir à un télé-acteur. Dans l'art antérieur, ces systèmes comprennent un moteur de reconnaissance de la parole auquel est associée une pluralité de tables de vocabulaire et de grammaire comprenant les mots ou expressions reconnus par le moteur, et une application vocale, également appelée logique de service, chargée de gérer les dialogues avec l'utilisateur par l'intermédiaire d'une interface vocale. La qualité de la reconnaissance effectuée par le moteur de reconnaissance de la parole influence grandement les possibilités du système vocal. Toutefois, pour le confort de l'utilisateur, il est également nécessaire de disposer d'une logique de service performante de manière à pouvoir fournir à l'utilisateur une qualité de service satisfaisante. Les systèmes actuels utilisent des logiques de service qui ne tiennent pas ou peu compte du comportement de l'utilisateur. Ils gèrent en effet assez mal l'écoute de l'utilisateur, le dialogue étant souvent trop succinct pour un utilisateur novice ou prolixe pour un habitué, le système ne prend pas en compte les mauvaises compréhensions, d'où des risques de répétition et de boucles ou encore, le système n'adapte pas les dialogues au mode de raisonnement de l'utilisateur.

Il est connu, par le document US 6 144 938, la réalisation d'applications vocales dans lesquelles la logique applicative est structurée. Il est prévu dans ce document que l'utilisateur puisse définir le type de personnalisation de son service. L'utilisateur peut ainsi choisir que le dialogue se fasse par exemple, en utilisant une voix féminine, avec diverses règles de politesse, en utilisant des commentaires qui peuvent prendre une forme négative lorsque sont rencontrés des problèmes. Toutefois, de telles applications vocales ne permettent pas d'adapter dynamiquement le dialogue en fonction des conditions rencontrées.

Il est également connu par la demande de brevet européen EP 0 697 780 A2, un répondeur vocal apte à poser des questions/instructions en fonction de la compétence de l'utilisateur en prenant en compte le temps moyen que met l'utilisateur pour appuyer sur une touche. Un tel répondeur ne peut pas gérer de manière dynamique l'évolution des dialogues avec l'utilisateur. Le document DE 199 56 747 décrit un dispositif de reconnaissance vocale analysant certains paramètres pour demander ou non à l'utilisateur d'améliorer sa façon de s'exprimer. L'inconvénient de ce type de dispositif est que c'est en définitive l'utilisateur qui doit s'adapter aux conditions de dialogue rencontrées.

Le but de l'invention est de proposer un procédé de navigation vocale qui ne présente plus les inconvénients de l'art antérieur.

Ce but est atteint par un procédé de navigation adaptative dans un système vocal interactif comprenant un moteur de reconnaissance d'un énoncé oral d'un utilisateur, une application vocale mémorisée dans une mémoire d'une unité centrale d'un système informatique et gérant, par des moyens de gestion de dialogue, le dialogue avec l'utilisateur, à travers une interface vocale, en fonction de la reconnaissance effectuée, caractérisé en ce qu'il comprend une gestion dynamique de l'ergonomie des dialogues avec l'utilisateur pour adapter l'application vocale en fonction d'une pluralité d'indicateurs liés au comportement de l'utilisateur et représentés par des données mémorisées dans la mémoire de l'unité centrale.

Selon une autre particularité, le procédé comprend une étape d'analyse de la reconnaissance effectuée et en fonction de cette analyse et de l'état d'au moins un indicateur, un déclenchement d'une action gérée par l'application vocale.

Selon une autre particularité, l'action peut correspondre soit à un envoi d'une réponse à un énoncé oral effectué par l'utilisateur, soit à une demande à l'utilisateur d'une répétition de son énoncé oral, à une demande à l'utilisateur de parler, soit à un renvoi vers une consultation d'une personne physique ou encore à une modification du niveau d'assistance à apporter à l'utilisateur.

Selon une autre particularité, préalablement au déclenchement de l'action, est effectuée une étape d'envoi d'une demande de confirmation de la reconnaissance effectuée.

Selon une autre particularité, le procédé comprend une étape de mémorisation et d'évolution, au fur et à mesure du dialogue avec l'utilisateur, de la valeur de plusieurs compteurs correspondant à un premier indicateur représentatif du niveau de dialogue de l'utilisateur, à un deuxième indicateur basé sur la qualité du dialogue et à un troisième indicateur représentatif de l'historique du dialogue avec l'utilisateur.

Selon une autre particularité, le procédé comprend une étape d'incrémentation d'un compteur de niveau de dialogue déclenchant une étape de modification du niveau d'assistance.

Selon une autre particularité, le procédé comprend une étape d'incrémentation d'un compteur de non-réponse qui, lorsque ce compteur est strictement inférieur à une valeur maximale, déclenche une étape d'envoi à l'utilisateur d'une demande de parler.

Selon une autre particularité, le procédé comprend une étape d'incrémentation d'un compteur de non-compréhension qui, lorsque ce compteur est inférieur à une valeur maximale, déclenche une étape d'envoi à l'utilisateur d'une demande de répétition.

Un autre but de l'invention est de proposer un système de navigation vocale pouvant mettre en oeuvre le procédé décrit ci-dessus.

Ce but est atteint par un système de navigation vocale interactif comprenant un moteur de reconnaissance d'un énoncé oral d'un utilisateur, une application vocale mémorisée dans une mémoire d'une unité centrale d'un système informatique et gérant, par des moyens de gestion du dialogue, le dialogue avec l'utilisateur, à travers une interface vocale, en fonction de la reconnaissance effectuée, caractérisé en ce qu'il comprend également des moyens de gestion dynamique de l'ergonomie des dialogues avec l'utilisateur pour adapter l'application vocale en fonction d'une pluralité d'indicateurs liés au comportement de l'utilisateur et représentés par des données mémorisées dans la mémoire de l'unité centrale.

Selon une autre particularité, le système comprend des moyens d'analyse de la reconnaissance effectuée et des moyens de déclenchement d'une action gérée par l'application vocale, en fonction de l'analyse de la reconnaissance effectuée et de l'état d'au moins un indicateur.

Selon une autre particularité, le système comprend des moyens d'élaboration et d'envoi d'une réponse à un énoncé oral effectué par l'utilisateur, des moyens d'élaboration et d'envoi d'une demande de confirmation de la reconnaissance effectuée, des moyens d'élaboration et d'envoi d'une demande à l'utilisateur d'une répétition de son énoncé oral ou d'une demande à l'utilisateur de parler, des moyens de basculement du dialogue vers une personne physique et des moyens de réglage d'un niveau d'assistance à apporter à l'utilisateur.

Selon une autre particularité, le système comprend un premier indicateur représentatif du niveau de l'énoncé oral de l'utilisateur, un deuxième indicateur représentatif de la qualité du dialogue et un troisième indicateur représentatif de l'historique du dialogue avec l'utilisateur.

Selon une autre particularité, chacun des indicateurs est associé à au moins un compteur mémorisé dont la valeur peut évoluer au fur et à mesure du dialogue avec l'utilisateur.

Selon une autre particularité, au premier indicateur est associé un compteur dit du niveau de dialogue, mémorisé dans la mémoire de l'unité centrale, qui lorsqu'il est incrémenté ou décrémenté, déclenche la modification du niveau d'assistance.

Selon une autre particularité, au deuxième indicateur correspondent deux compteurs, un premier compteur local dit de non-compréhension et un deuxième compteur local dit de non-réponse, tous deux mémorisés dans la mémoire de l'unité centrale.

Selon une autre particularité, au troisième indicateur correspond un compteur dit général d'historique mémorisé dans la mémoire de l'unité centrale.

Selon une autre particularité, le compteur du niveau de dialogue peut prendre des valeurs allant de 0 à 4.

Selon une autre particularité, le compteur de non-compréhension peut prendre des valeurs allant de 0 jusqu'à une valeur dépassant sa valeur maximale mémorisée qui est de 2.

Selon une autre particularité, le compteur de non-réponse peut prendre des valeurs allant de 0 jusqu'à une valeur dépassant sa valeur maximale mémorisée qui est de 2.

Selon une autre particularité, le compteur général historique peut prendre des valeurs allant de 0 jusqu'à une valeur dépassant sa valeur maximale mémorisée qui est de 3.

L'invention concerne également l'utilisation du système vocal décrit ci-dessus dans le domaine de la téléphonie mobile.

L'invention, avec ses caractéristiques et avantages, ressortira plus clairement à la lecture de la description faite en référence aux dessins annexés dans lesquels :
- la figure 1 représente schématiquement le système de navigation vocale selon l'invention,
- la figure 2 représente un algorithme utilisé dans le procédé de navigation vocale selon l'invention.

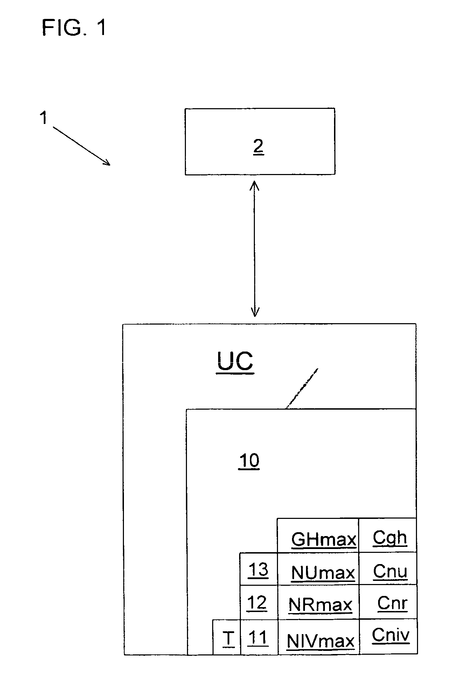

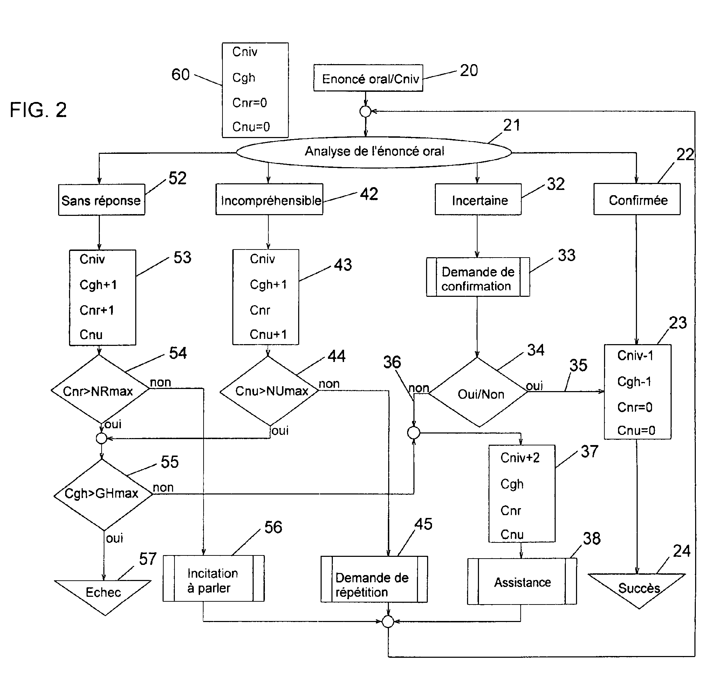

L'invention va à présent être décrite en liaison avec les figures 1 et 2.

L'invention a pour but de gérer de manière dynamique et évolutive la relation entre un système vocal implanté dans un réseau de communication et l'utilisateur connecté à ce réseau par tous moyens tels que téléphone ou ordinateur. Ainsi lorsque l'utilisateur est connecté, par un réseau par exemple de radiotéléphonie au système (1) de navigation vocale comportant au moins une mémoire (10), par exemple d'une unité centrale (UC) d'un système informatique, comme représenté en figure 1, il sera guidé et assisté de manière flexible par ce que l'on appelle un contexte-utilisateur, en fonction notamment de son degré de connaissance, de la précision de sa recherche et de la qualité des échanges. La mémoire pourra être constituée de une ou plusieurs mémoires et sera de tous types, c'est à dire RAM, ROM, PROM, EPROM...

En référence à la figure 1, le système de navigation vocale selon l'invention comprend une interface vocale (2) recevant et envoyant les informations sous forme vocale, c'est-à-dire sous forme analogique. Le système selon l'invention comprend également un moteur (11) de reconnaissance de la parole. Ce moteur sera par exemple intégré à l'unité centrale (UC) d'un système informatique et chargé d'effectuer la reconnaissance des paroles provenant de l'utilisateur à travers le réseau. Pour cela, ce moteur (11) de reconnaissance de la parole sera associé à des tables (T) de vocabulaires et de grammaires stockées dans la mémoire (10) par exemple de l'unité centrale (UC). Le moteur (11) de reconnaissance reçoit les informations préalablement numérisées puis, en consultant les tables, tente d'associer les données à une lettre ou une syllabe pour reconstituer un mot ou une phrase.

Une application vocale (12) ou autrement appelée logique de service est également stockée dans la mémoire (10), par exemple, de l'unité centrale (UC). Cette application vocale (12) est chargée de gérer, par des moyens de gestion de dialogue, le dialogue avec l'utilisateur. Un moteur (13) d'analyse, par exemple intégré à l'unité centrale (UC), effectue l'analyse des données reçues du moteur (11) de reconnaissance vocale. Cette analyse consiste à comprendre le sens de l'énoncé oral prononcé par l'utilisateur. En fonction de cette analyse, l'application vocale (12), par l'intermédiaire des moyens de gestion de dialogue, établit les réponses adéquates et les envoie vers l'interface vocale (2) pour être reproduite et communiquée à l'utilisateur. Ces moyens de gestion de dialogue seront chargés par l'application vocale (12) de chercher dans les tables (T) les informations à assembler pour construire la réponse ou une question complémentaire et envoyer cette réponse ou cette question complémentaire à l'interface vocale (2) afin d'être reproduite.

Une session est définie ci-après par une seule communication entre l'utilisateur utilisant son téléphone ou son ordinateur et le système de navigation vocale implanté dans le réseau. Pendant une session, un utilisateur pourra donc poser au système (1) de navigation vocale plusieurs questions indépendantes.

Pour suivre la progression de l'utilisateur dans sa navigation, un contexte-utilisateur lui est associé dans une mémoire du système. Ce contexte va accompagner l'utilisateur pendant toute la durée de sa session et va faire réagir l'application vocale (12) de manière adéquate en fonction du comportement de l'utilisateur et de l'historique de la session.

Ce contexte utilisateur comprend un premier indicateur sur le niveau de l'utilisateur qui est déterminé par la qualité de l'énoncé oral de l'utilisateur. En effet, l'utilisateur, lors d'une communication avec le système (1) de navigation vocale, utilisera dans son énoncé oral un langage plus ou moins approximatif. Dans son langage, l'utilisateur paraîtra plutôt expérimenté, plutôt accoutumé ou plutôt novice. Ce premier indicateur est lié à un autre indicateur prenant en compte le niveau d'assistance à apporter à l'utilisateur. En fonction du niveau de dialogue de l'utilisateur, une assistance plus ou moins importante, c'est-à-dire des explications plus ou moins détaillées, lui sera apportée.

Le contexte utilisateur comprend également un deuxième indicateur basé sur la qualité du dialogue entre l'utilisateur et le système de navigation vocale. Cet indicateur prendra en compte les non-réponses de l'utilisateur ou les incompréhensions perçues par le système de navigation vocale.

Le contexte utilisateur comprend également un troisième indicateur basé sur l'historique du dialogue avec l'utilisateur dans une session.

Selon l'invention, à chaque indicateur est associé un compteur mémorisé, par exemple dans la mémoire (10) de l'unité centrale (UC), qui s'incrémente ou se décrémente en fonction du comportement de l'utilisateur. Ces compteurs permettent, au cours d'une session, d'adapter le contexte-utilisateur de manière dynamique en fonction du comportement de l'utilisateur.

Selon l'invention, au premier indicateur sur le niveau de l'utilisateur correspondra un compteur du niveau de dialogue (Cniv). Ce compteur de niveau de dialogue (Cniv) est un compteur pouvant évoluer au cours d'une session entière. Ce compteur peut varier au cours d'une session entre 0 et une valeur maximale (NIVmax) mémorisée, par exemple, dans la mémoire (10) de l'unité centrale (UC). Cette valeur maximale sera par exemple de 4. Chaque valeur prise par le compteur (Cniv) est associée à un niveau différent d'assistance à apporter à l'utilisateur. Lorsque le compteur de niveau de dialogue (Cniv) s'incrémente, les explications fournies par le système de navigation vocale deviennent plus détaillées. Au cours d'une session, ce compteur de niveau de dialogue (Cniv), s'incrémente deux fois plus vite qu'il ne se décrémente, de manière à être sûr que l'utilisateur reste toujours bien assisté.

Au deuxième indicateur correspondront deux compteurs distincts, un compteur dit de non-compréhension (Cnu) et un compteur dit de non-réponse (Cnr). Le compteur de non-compréhension (Cnu) est incrémenté par l'application vocale (12) à chaque non-compréhension de l'utilisateur par le système (1) de navigation vocale. Le compteur de non-réponse (Cnr) est incrémenté par l'application vocale (12) à chaque non-réponse de l'utilisateur à une question posée par le système (1) de navigation vocale. Ces deux compteurs sont locaux, c'est-à-dire qu'ils n'évoluent pas dans la session entière mais seulement, par exemple, dans le cadre d'une question posée par l'utilisateur. Ces compteurs seront mémorisés plutôt dans une mémoire de l'unité centrale (UC) et peuvent varier entre 0 et une valeur supérieure à une valeur maximale (NUmax, respectivement NRmax). Ces valeurs maximales (NUmax, NRmax) sont mémorisées, par exemple, dans la mémoire (10) de l'unité centrale (UC). Chaque valeur maximale mémorisée sera par exemple 2.

Au troisième indicateur basé sur l'historique du dialogue correspondra un compteur général d'historique (Cgh). Au cours d'une session, l'application vocale (12) incrémente ou décrémente ce compteur en fonction des événements, comme expliqué plus loin, au fur et à mesure du dialogue entre l'utilisateur et le système (1) de navigation vocale. Ce compteur général historique (Cgh) peut varier entre 0 et une valeur supérieure à une valeur maximale (GHmax). Cette valeur maximale (GHmax) est mémorisée, par exemple dans la mémoire (10) de l'unité centrale (UC) et vaut par exemple 3. Le dépassement de cette valeur maximale détecté par l'application vocale, provoque le basculement de la communication vers un télé-acteur. La valeur maximale (GHmax) est fixée pour que, en cas de problèmes récurrents, le basculement se produise avant que l'utilisateur ait raccroché.

Selon l'invention, en référence à la figure 2, le procédé de navigation vocale se déroule de la manière suivante.

Un utilisateur par exemple d'un terminal mobile se trouvant dans la cellule d'une station de base, appelle le service de navigation vocale selon l'invention. Au début d'une session, tous les compteurs (60) sont initialisés à 0, en particulier le compteur de niveau de dialogue (Cniv) qui peut agir sur le niveau d'assistance. Après un message d'accueil envoyé par le système de navigation vocale, l'utilisateur peut effectuer un premier énoncé oral, par exemple sous la forme d'une question. Tout d'abord, cette question (20) est reconnue par le moteur (11) de reconnaissance vocale qui transmet la phrase reconnue au moteur (13) d'analyse chargé, dans une première étape (21) commune à toutes les questions, d'analyser le sens de cette phrase. Cette question de l'utilisateur est dite question principale (20). Après un succès, c'est-à-dire l'envoi d'une réponse à une question principale par le système (1) de navigation vocale, une nouvelle question principale indépendante peut être posée par l'utilisateur. Au cours d'une session, l'utilisateur pourra donc, s'il le souhaite, poser plusieurs questions principales indépendantes. Au début de chaque question principale, les compteurs locaux (60) de non-compréhension (Cnu) et de non-réponse (Cnr) sont initialisés à 0. Les autres compteurs général d'historique (Cgh) et de niveau de dialogue (Cniv) conservent leur valeur de la question principale précédente. De chaque question principale peuvent découler des questions dites secondaires faites par l'utilisateur pour préciser sa demande ou des réponses dites secondaires de l'utilisateur à des questions du système (1) de navigation vocale. Lors de la formulation d'une question ou d'une réponse secondaire, la valeur des compteurs de non-compréhension (Cnu) et de non-réponse (Cnr) n'est pas initialisée à 0.

L'analyse (21) effectuée par le moteur (13) d'analyse peut aboutir à plusieurs conclusions.
1) L'analyse peut être complète et confirmée (22). Dans ce cas, aucune confirmation supplémentaire n'est demandée à l'utilisateur. L'application vocale (12) établit avec succès, par l'intermédiaire des moyens de gestion de dialogue, une réponse (24) à la question principale (20) de l'utilisateur. L'application vocale (12) commande également dans une deuxième étape (23) la mise à jour des compteurs par décrémentation de 1 des compteurs de niveau de dialogue (Cniv) et général d'historique (Cgh). Dans le cas où la question principale (20) est la première question de la session, les compteurs de niveau de dialogue (Cniv) et général historique (Cgh) restent à 0. L'application vocale (12) initialise à zéro dans cette deuxième étape (23), les compteurs de non-réponse (Cnr) et de non-compréhension (Cnu). Cette initialisation est due au fait que ces compteurs sont locaux et doivent être initialisés (60) à chaque nouvelle question principale (20) énoncée par l'utilisateur.
2) l'analyse (21) peut également être incertaine (32), c'est-à-dire que le moteur (13) d'analyse n'a pas suffisamment compris la question principale pour que l'application vocale (12) puisse établir avec succès une réponse (24) à la question. Dans ce cas, l'application vocale, par l'intermédiaire des moyens de gestion de dialogue, envoie sur l'interface vocale (2), dans une troisième étape (33), une demande de confirmation à l'utilisateur de la question insuffisamment comprise par le moteur d'analyse. Dans une quatrième étape (34), le demandeur doit donner une réponse secondaire en confirmant qu'il s'agit bien de sa question ou en infirmant.
   a) Dans le cas où il confirme en disant par exemple "oui" (35) dans l'interface vocale, l'application vocale (12), par l'intermédiaire des moyens de gestion de dialogue, établit une réponse (24) à la question principale (20) de l'utilisateur et effectue la mise à jour des compteurs selon la deuxième étape (23).
   b) Dans le cas où l'utilisateur ne confirme pas la proposition formulée par le système de navigation vocale en disant par exemple "non" (36), l'application vocale (12) commande, dans une cinquième étape (37), la modification du niveau d'assistance en incrémentant le compteur de niveau de dialogue (Cniv), par exemple de 2, les autres compteurs restent à leur valeur précédente. Le niveau d'assistance (38) reste à cette valeur jusqu'à une nouvelle modification pouvant intervenir au cours du reste de la session. Dans le cas où la question principale est la première question de la session, le compteur du niveau de dialogue (Cniv) est alors à 2. Le niveau d'assistance a donc augmenté et l'utilisateur est alors amené à formuler une question secondaire. Du fait que cette question est secondaire, les compteurs de non-réponse (Cnr) et de non-compréhension (Cnu) ne seront donc pas initialisés à 0. Cette question secondaire sera analysée par le moteur (13) d'analyse lors de la première étape (21).
3) L'analyse (21) peut aboutir à quelque chose d'incompréhensible (42) pour le moteur (13) d'analyse. Dans ce cas, l'application commande immédiatement, dans une sixième étape (43), l'incrémentation, par exemple de 1, du compteur général historique (Cgh), et commande également l'incrémentation, par exemple de 1, du compteur de non-compréhension (Cnu). Dans une septième étape (44), l'application vocale (12) effectue une comparaison entre la valeur du compteur de non-compréhension (Cnu) et la valeur maximale (NUmax) mémorisée pour ce compteur.
   a) Si la valeur du compteur de non-compréhension (Cnu) est inférieure à la valeur maximale mémorisée, par exemple 2, alors l'application vocale (12) commande, dans une huitième étape (45), l'envoi à l'utilisateur, par l'intermédiaire de l'interface vocale (2), d'une demande de répétition. La répétition effectuée par l'utilisateur sera analysée par le moteur (11) de reconnaissance vocale puis, au cours de la première étape (21), par le moteur (13) d'analyse. Les compteurs de non-réponse (Cnr) et de non-compréhension (Cnu) ne sont pas initialisés du fait que cette répétition constitue une question secondaire et non une question principale.
   b) Si la valeur du compteur de non-compréhension (Cnu) est supérieure (44) à la valeur maximale (NUmax) mémorisée, dans une neuvième étape (55), l'application vocale (12) effectue une comparaison entre la valeur du compteur général historique (Cgh) et la valeur maximale (GHmax) mémorisée pour celui-ci.
      - Si la valeur du compteur général historique (Cgh) est inférieure à la valeur maximale (GHmax) mémorisée, par exemple 3, alors la cinquième étape (37) est effectuée, c'est-à-dire qu'une modification du niveau d'assistance est commandée par l'application vocale (13) alors que le compteur de niveau de dialogue (Cniv) est incrémenté.
      - Si la valeur du compteur général historique (Cgh) est supérieure à la valeur maximale (GHmax) mémorisée, alors cela aboutit à un échec (57) et aucune réponse ne pourra être donnée à la question principale (20) de l'utilisateur. Dans ce cas, l'application vocale (12) met en relation l'utilisateur avec un télé-acteur. L'utilisateur est ainsi renvoyé vers une personne physique qui l'aidera encore plus. Dans tous les cas, ce renvoi devra pouvoir être effectué avant que l'utilisateur se lasse et finisse par interrompre la communication.
4) L'analyse peut aboutir au fait qu'aucun énoncé oral (52) n'a été effectué sur l'interface vocale (2) par l'utilisateur. Dans ce cas, l'application vocale (12) commande dans une dixième étape (53), l'incrémentation de 1 du compteur général historique (Cgh) et du compteur de non-réponse (Cnr). Dans une onzième étape (54), l'application vocale (12) effectue une comparaison entre la nouvelle valeur du compteur de non-réponse (Cnr) et la valeur maximale (NRmax) mémorisée pour celui-ci.
   a) Si la valeur du compteur de non-réponse (Cnr) est inférieure à la valeur maximale (NRmax) mémorisée pour celui-ci, l'application vocale (12), dans une douzième étape (56), établit et envoie à l'utilisateur une demande de parler. Le nouvel énoncé oral de l'utilisateur sera analysé par le moteur (11) de reconnaissance de la parole puis, à nouveau au cours de la première étape (21), par le moteur (13) d'analyse. Ce nouvel énoncé constituera une question secondaire, aucun compteur ne sera donc initialisé.
   b) Si la valeur du compteur de non-réponse (Cnr) est supérieure à la valeur maximale (NRmax) mémorisée, la neuvième étape (55) de comparaison décrite ci-dessus est effectuée.

Par conséquent, le système de navigation vocale selon l'invention, par l'intermédiaire de l'interface vocale, prononcera des phrases d'autant plus courtes que l'utilisateur est expérimenté et que l'assistance est réduite. Dans le cas où l'utilisateur hésite ou n'est pas compréhensible pour le moteur (11) de reconnaissance vocale ou le moteur d'analyse (13), le niveau d'assistance sera accru de manière à détailler les textes et les explications. Le système de navigation vocale selon l'invention évite les dialogues qui ne font pas progresser la recherche. Les compteurs de non-compréhension et non-réponse sont présents pour limiter le nombre de boucles et la présence du compteur général historique permet, lorsque la valeur maximale mémorisée pour ce dernier est dépassée, de renvoyer l'utilisateur vers un télé-acteur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de navigation adaptative dans un système (1) vocal interactif comprenant un moteur (11) de reconnaissance d'un énoncé oral d'un utilisateur, une application vocale (12) mémorisée dans une mémoire (10) d'une unité centrale (UC) d'un système informatique et gérant, par des moyens de gestion de le dialogue, avec l'utilisateur, à travers une interface vocale (2), en fonction de la reconnaissance effectuée, **caractérisé en ce qu'**il comprend une gestion dynamique de l'ergonomie des dialogues avec l'utilisateur pour adapter l'application vocale (12) en fonction d'une pluralité d'indicateurs liés au comportement de l'utilisateur et représentés par des données mémorisées dans la mémoire (10) de l'unité centrale (UC), et **en ce qu'**il comprend une étape de mémorisation et d'évolution, au fur et à mesure du dialogue avec l'utilisateur, de la valeur de plusieurs compteurs correspondant à un premier indicateur représentatif du niveau de dialogue de l'utilisateur, à un deuxième indicateur basé sur la qualité du dialogue prenant en compte les non-réponses de l'utilisateur ou les incompréhensions perçues par le système (1) interactif et à un troisième indicateur représentatif de l'historique du dialogue avec l'utilisateur.

2. Procédé selon la revendication 1, **caractérisé en ce qu'**il comprend une étape d'analyse (21) de la reconnaissance effectuée et en fonction de cette analyse (21) et de l'état d'au moins un indicateur, un déclenchement d'une action gérée par l'application vocale (12).

3. Procédé selon la revendication 2, **caractérisé en ce que** faction peut correspondre soit à un envoi d'une réponse à un énoncé oral effectué par l'utilisateur, soit à demande à l'utilisateur d'une répétition (45) de son énoncé oral, à une demande (56) à l'utilisateur de parler, soit à un renvoi vers une consultation d'une personne physique (57) ou encore à une modification du niveau d'assistance (38) à apporter à l'utilisateur.

4. Procédé selon la revendication 2, **caractérisé en ce que** préalablement au déclenchement de l'action, est effectuée une étape d'envoi d'une demande (33) de confirmation de la reconnaissance effectuée.

5. Procédé selon la revendication 3, **caractérisé en ce qu'**il comprend une étape d'incrémentation (37) d'un compteur de niveau de dialogue (Cniv) déclenchant une étape (38) de modification du niveau d'assistance.

6. Procédé selon la revendication 3, **caractérisé en ce qu'**il comprend une étape (53) d'incrémentation d'un compteur de non-réponse (Cnr) qui, lorsque ce compteur (Cnr) est strictement inférieur à une valeur maximale (NRmax), déclenche une étape (56) d'envoi à l'utilisateur d'une demande de parler. 7. Procédé selon la revendication 3, **caractérisé en ce qu'**il comprend

7. Procédé selon la revendication 3, **caractérisé en ce qu'**il comprend une étape (43) d'incrémentation d'un compteur de non-compréhension (Cnu) qui, lorsque ce compteur (Cnu) est inférieur à une valeur maximale (NUmax), déclenche une étape (45) d'envoi à l'utilisateur d'une demande de répétition.

8. Système (1) de navigation vocale interactif comprenant un moteur (11) de reconnaissance d'un énoncé oral d'un utilisateur, une application vocale (12) mémorisée dans une mémoire (10) d'une unité centrale (UC) d'un système informatique et gérant, par des moyens de gestion du dialogue, le dialogue avec l'utilisateur, à travers une interface vocale (2), en fonction de la reconnaissance effectuée, **caractérisé en ce qu'**il comprend également :
- des moyens de gestion dynamique de l'ergonomie des dialogues avec l'utilisateur pour adapter l'application vocale (12) en fonction d'une pluralité d'indicateurs liés au comportement de l'utilisateur et représentés par des mémorisées dans la mémoire (10) de l'unité centrale (UC);
- des moyens de stockage de valeurs de compteurs correspondant à des indicateurs respectifs, incluant un premier indicateur représentatif du niveau de l'énoncé oral de l'utilisateur, un deuxième indicateur représentatif de la qualité du dialogue prenant en compte les non-réponses de l'utilisateur ou les incompréhensions perçues par le système (1) interactif et un troisième indicateur représentatif de l'historique du dialogue avec l'utilisateur ; et
- des moyens de faire évoluer, au fur et à mesure du dialogue avec l'utilisateur, au moins une valeur de compteur associée à un des indicateurs.

9. Système (1) selon la revendication 8, **caractérisé en ce qu'**il comprend des moyens d'analyse de la reconnaissance effectuée et des moyens de déclenchement d'une action gérée par l'application vocale (12), en fonction de l'analyse de la reconnaissance effectuée et de l'état d'au moins un Indicateur.

10. Système (1) selon la revendication 9, **caractérisé en ce qu'**il comprend des moyens d'élaboration et d'envoi d'une réponse à un énoncé oral effectuée par l'utilisateur, des moyens d'élaboration et d'envoi d'une demande de confirmation de la reconnaissance effectuée, des moyens d'élaboration et d'envoi d'une demande à l'utilisateur d'une répétition de son énoncé oral ou d'une demande à l'utilisateur de parler, des moyens de basculement du dialogue vers une personne physique et des moyens de réglage d'un niveau d'assistance à apporter à l'utilisateur.

11. Système (1) selon une des revendications 8 à 10, **caractérisé en ce que** chacun des indicateurs est associé à au moins un compteur mémorisé dont la valeur peut évoluer au fur et à mesure du dialogue avec l'utilisateur.

12. Système selon la revendication 11, **caractérisé en ce qu'**au premier indicateur est associé un compteur dit du niveau de dialogue (Cniv), mémorisé dans la mémoire (10) de l'unité centrale (UC), qui lorsqu'il est incrémenté ou décrémenté, déclenche la modification du niveau d'assistance.

13. Système selon la revendication 11 ou 12, **caractérisé en ce qu'**au deuxième indicateur correspondent deux compteurs, un premier compteur local dit de non-compréhension (Cnu) et un deuxième compteur local dit de non-réponse (Cnr), tous deux mémorisés dans la mémoire (10) de l'unité centrale (UC).

14. Système selon l'une des revendications 11 à 13, **caractérisé en ce qu'**au troisième indicateur correspond un compteur dit général d'historique mémorisé dans la mémoire (10) de l'unité centrale (UC).

15. Système selon la revendication 12, **caractérisé en ce que** le compteur du niveau de dialogue (Cniv) peut prendre des valeurs allant de 0 à 4.

16. Système selon la revendication 13, **caractérisé en ce que** le compteur de non-compréhension (Cnu) peut prendre des valeurs allant de 0 jusqu'à une valeur dépassant sa valeur maximale (NUmax) mémorisée qui est de 2.

17. Système selon la revendication 13, **caractérisé en ce que** le compteur de non-réponse (Cnr) peut prendre des valeurs allant de 0 jusqu'à une valeur dépassant sa valeur maximale (NRmax) mémorisée qui est de 2.

18. Système selon la revendication 14, **caractérisé en ce que** le compteur général historique (Cgh) peut prendre des valeurs allant de 0 jusqu'à une valeur dépassant sa valeur maximale (GHmax) mémorisée qui est de 3.

19. Utilisation du système vocal selon les revendications 8 à 18 dans le domaine de la téléphonie mobile.

## Patentansprüche

1. Verfahren zur adaptiven Navigation in einem interaktiven Sprachsystem (1), das eine Maschine (11) für die Wiedererkennung einer mündlichen Äußerung eines Anwenders und eine in einem Speicher (10) einer Zentraleinheit (UC) eines Datenverarbeitungssystems gespeicherte Sprachanwendung (12) umfasst und über Dialogsteuerungsmittel den Dialog mit dem Anwender über eine Sprachschnittstelle (2) in Abhängigkeit von der erfolgten Wiedererkennung steuert, **dadurch gekennzeichnet, dass** es eine dynamische Steuerung der Ergonomie der Dialoge mit dem Anwender umfasst, um die Sprachanwendung (12) in Abhängigkeit von mehreren mit dem Verhalten des Anwenders in Verbindung stehenden Indikatoren, die durch die in dem Speicher (10) der Zentraleinheit (UC) gespeicherten Daten repräsentiert werden, anzupassen, und dass es einen Schritt umfasst, bei dem nach Maßgabe des Dialogs mit dem Anwender der Wert mehrerer Zähler, die einem ersten Indikator, der die Dialogebene des Anwenders repräsentiert, einem zweiten Indikator, der auf der Qualität des Dialogs basiert, die die fehlenden Antworten des Anwenders oder die von dem interaktiven System (1) wahrgenommenen Verstehensdefizite berücksichtigt, und einem dritten Indikator, der die Historie des Dialogs mit dem Anwender repräsentiert, entsprechen, gespeichert und entwickelt wird.

2. Verfahren nach Anspruch 1, **dadurch gekennzeichnet, dass** es einen Schritt (21) der Analyse der erfolgten Wiedererkennung und in Abhängigkeit von dieser Analyse (21) und des Zustandes wenigstens eines Indikators ein Auslösen einer durch die Sprachanwendung (12) gesteuerten Aktion umfasst.

3. Verfahren nach Anspruch 2, **dadurch gekennzeichnet, dass** die Aktion entweder dem Schicken einer Antwort auf eine von einem Anwender vorgenommene mündliche Äußerung oder einer Aufforderung des Anwenders, dass er seine mündliche Äußerung wiederholt (45), einer Aufforderung (56) des Anwenders, dass er spricht, oder einem Verweis auf eine Beratung durch eine physische Person (57) oder aber einer Modifikation der dem Anwender zu bietenden Unterstützungsebene (38) entsprechen kann.

4. Verfahren nach Anspruch 2, **dadurch gekennzeichnet, dass** vor dem Auslösen der Aktion ein Schritt des Schickens einer Aufforderung (33) zur Bestätigung der erfolgten Wiedererkennung ausgeführt wird.

5. Verfahren nach Anspruch 3, **dadurch gekennzeichnet, dass** es einen Schritt des Inkrementierens (37) eines Dialogebenen-Zählers (Cniv) umfasst, der einen Schritt (38) des Modifizierens der Unterstützungsebene auslöst.

6. Verfahren nach Anspruch 3, **dadurch gekennzeichnet, dass** es einen Schritt (53) des Inkrementierens eines Zählers (Cnr) für fehlende Antwort umfasst, der dann, wenn dieser Zähler (Cnr) streng kleiner als ein Maximalwert (NRmax) ist, einen Schritt (56) des Schickens einer Aufforderung des Anwenders, dass er spricht, auslöst.

7. Verfahren nach Anspruch 3, **dadurch gekennzeichnet, dass** es einen Schritt (43) des Inkrementierens eines Verständnisdefizit-Zählers (Cnu) umfasst, der dann, wenn dieser Zähler (Cnu) kleiner als ein Maximalwert (NUmax) ist, einen Schritt (45) des Schickens einer Aufforderung des Anwenders, dass er wiederholt, auslöst.

8. System (1) für die interaktive Sprachnavigation, das eine Maschine (11) für die Wiedererkennung einer mündlichen Äußerung eines Anwenders und eine in einem Speicher (10) einer Zentraleinheit (UC) eines Datenverarbeitungssystems gespeicherte Sprachanwendung, die über Dialogsteuerungsmittel den Dialog mit dem Anwender über eine Sprachschnittstelle (2) in Abhängigkeit von der erfolgten Wiedererkennung steuert, umfasst, **dadurch gekennzeichnet, dass** es außerdem umfasst:
- Mittel zur dynamischen Steuerung der Ergonomie der Dialoge mit dem Anwender, um die Sprachanwendung (12) in Abhängigkeit von mehreren Indikatoren, die mit dem Verhalten des Anwenders in Verbindung stehen und durch die im Speicher (10) der Zentraleinheit (UC) gespeicherten Daten repräsentiert werden, anzupassen;
- Mittel zum Speichern von Zählerwerten, die den entsprechenden Indikatoren entsprechen und einen ersten Indikator, der die Ebene der mündlichen Äußerung des Anwenders repräsentiert, einen zweiten Indikator, der die Qualität des Dialogs unter Berücksichtigung der fehlenden Antworten des Anwenders oder der von dem interaktiven System (1) wahrgenommenen Verständnisdefizite repräsentiert, und einen dritten Indikator, der die Historie des Dialogs mit dem Anwender repräsentiert, umfassen; und
- Mittel, die nach Maßgabe des Dialogs mit dem Anwender wenigstens einen Zählerwert, der einem der Indikatoren zugeordnet ist, entwickeln.

9. System (1) nach Anspruch 8, **dadurch gekennzeichnet, dass** es Mittel für die Analyse der erfolgten Wiedererkennung und Mittel zum Auslösen einer durch die Sprachanwendung (12) gesteuerten Aktion in Abhängigkeit von der Analyse der erfolgten Wiedererkennung und vom Zustand wenigstens eines Indikators umfasst.

10. System (1) nach Anspruch 9, **dadurch gekennzeichnet, dass** es Mittel zum Ausarbeiten und Schicken einer Antwort auf eine von einem Anwender vorgenommene mündliche Äußerung, Mittel zum Ausarbeiten und Schicken einer Aufforderung zur Bestätigung der erfolgten Wiedererkennung, Mittel zum Ausarbeiten und Schicken einer Aufforderung des Anwenders, dass er seine mündliche Äußerung wiederholt, oder einer Aufforderung des Anwenders, dass er spricht, Mittel zum Weiterleiten des Dialogs zu einer physischen Person und Mittel zum Einstellen einer dem Anwender zu bietenden Unterstützungsebene umfasst.

11. System (1) nach einem der Ansprüche 8 bis 10, **dadurch gekennzeichnet, dass** jeder der Indikatoren wenigstens einem gespeicherten Zähler zugeordnet ist, dessen Wert sich nach Maßgabe des Dialogs mit dem Anwender entwickeln kann.

12. System nach Anspruch 11, **dadurch gekennzeichnet, dass** dem ersten Indikator ein sogenannter Dialogebenen-Zähler (Cniv) zugeordnet ist, der im Speicher (10) der Zentraleinheit (UC) gespeichert ist und der dann, wenn er inkrementiert oder dekrementiert wird, die Modifikation der Unterstützungsebene auslöst.

13. System nach Anspruch 11 oder 12, **dadurch gekennzeichnet, dass** dem zweiten Indikator zwei Zähler entsprechen, nämlich ein erster lokaler, so genannter Verstehensdefizit-Zähler (Cnu) und ein zweiter lokaler, so genannter Zähler (Cnr) für fehlende Antwort, die beide im Speicher (10) der Zentraleinheit (UC) gespeichert sind.

14. System nach einem der Ansprüche 11 bis 13, **dadurch gekennzeichnet, dass** dem dritten Indikator ein so genannter allgemeiner Historienzähler entspricht, der im Speicher (10) der Zentraleinheit (UC) gespeichert ist.

15. System nach Anspruch 12, **dadurch gekennzeichnet, dass** der Dialogebenen-Zähler (Cniv) Werte im Bereich von 0 bis 4 annehmen kann.

16. System nach Anspruch 13, **dadurch gekennzeichnet, dass** der Verstehensdefizit-Zähler (Cnu) Werte im Bereich von 0 bis zu einem Wert, der seinen gespeicherten Maximalwert (NUmax), der 2 ist, überschreitet, annehmen kann.

17. System nach Anspruch 13, **dadurch gekennzeichnet, dass** der Zähler (Cnr) für fehlende Antwort Werte im Bereich von 0 bis zu einem Wert, der seinen gespeicherten Maximalwert NRmax, der 2 ist, überschreitet, annehmen kann.

18. System nach Anspruch 14, **dadurch gekennzeichnet, dass** der allgemeine Historienzähler (Cgh) Werte im Bereich von 0 bis zu einem Wert, der seinen gespeicherten Maximalwert (GHmax), der 3 ist, überschreitet, annehmen kann.

19. Anwendung des Sprachsystems nach den Ansprüchen 8 bis 18 im Gebiet der Mobiltelephone.

## Claims

1. Adaptive navigation method in an interactive voice system (1) comprising an engine (11) for recognising an oral statement by a user, a voice application (12) stored in a memory (10) of a central processing unit (CPU) of an information processing system and managing dialogue with the user by dialogue management means, through a voice interface (2), as a function of the recognition performed, **characterised in that** it comprises dynamic management of the ergonomics of the dialogues with the user in order to adapt the voice application (12) as a function of a plurality of indicators linked to the behaviour of the user and represented by data stored in the memory (10) of the central processing unit (CPU), and **in that** it comprises a step of storing and evolving, as the dialogue with the user progresses, the value of several counters corresponding to a first indicator representing the level of dialogue of the user, a second indicator based on the quality of the dialogue taking account of any non-responses from the user or any failures to understand perceived by the interactive system (1) and a third indicator representing the history of the dialogue with the user.

2. Method according to Claim 1; **characterised in that** it comprises a step of analysing (21) the recognition performed and, as a function of this analysis (21) and of the state of at least one indicator, triggering an action managed by the voice application (12).

3. Method according to Claim 2, **characterised in that** the action can correspond either to the sending of a response to an oral statement made by the user, or to a request to the user to repeat (45) his oral statement, to a request (56) to the user to speak, or a referral back to consult an individual (57) or else a modification of the level of assistance (38) to be given to the user.

4. Method according to Claim 2, **characterised in that**, prior to the triggering of the action, a step is carried out of sending a request (33) for confirmation of the recognition performed.

5. Method according to Claim 3, **characterised in that** it comprises a step of incrementing (37) a dialogue level counter (Cniv) triggering a step (38) of modifying the level of assistance.

6. Method according to Claim 3, **characterised in that** it comprises a step (53) of incrementing a non-response counter (Cnr) which, when this counter (Cnr) is strictly below a maximum value (NRmax), triggers a step (56) of sending the user of a request to speak.

7. Method according to Claim 3, **characterised in that** it comprises a step (43) of incrementing a non-understanding counter (Cnu) which, when this counter (Cnu) is below a maximum value (NUmax), triggers a step (45) of sending the user a request to repeat.

8. Interactive voice navigation system (1) comprising an engine (11) for recognising an oral statement by a user, a voice application (12) stored in a memory (10) of a central processing unit (CPU) of an information processing system and managing dialogue with the user by dialogue management means, through a voice interface (2), as a function of the recognition performed, **characterised in that** it also comprises:
- means for dynamic management of the ergonomics of dialogues with the user in order to adapt the voice application (12) as a function of a plurality of indicators linked to the behaviour of the user and represented by data stored in the memory (10) of the central processing unit (CPU);
- means for storing values of counters corresponding to respective indicators, including a first indicator representing the level of the oral statement by the user, a second indicator representing the quality of the dialogue taking account of any non-responses from the user or any failures to understand perceived by the interactive system (1) and a third indicator representing the history of the dialogue with the user; and
- means for causing at least one counter value associated with one of the indicators to evolve as the dialogue with the user progresses.

9. System (1) according to Claim 8, **characterised in that** it comprises means for analysing the recognition performed and means for triggering an action managed by the voice application (12), as a function of the analysis of the recognition performed and the state of at least one indicator.

10. System (1) according to Claim 9, **characterised in that** it comprises means for preparing and sending a response to an oral statement made by the user, means for preparing and sending a request for confirmation of the recognition performed, means for preparing and sending a request to the user to repeat his oral statement or a request to the user to speak, means for switching the dialogue to a physical person and means for setting a level of assistance to be given to the user.

11. System (1) according to one of Claims 8 to 10, **characterised in that** each of the indicators is associated with at least one stored counter, the value of which can evolve as the dialogue with the user progresses.

12. System according to Claim 11, **characterised in that** the first indicator is associated with a "dialogue level" counter (Cniv), stored in the memory (10) of the central processing unit (CPU) which, when it is incremented or decremented, triggers the modification of the level of assistance.

13. System according to Claim 11 or 12, **characterised in that** two counters correspond to the second indicator, a first local "non-understanding" counter (Cnu) and a second local "non-response" counter (Cnr), both stored in the memory (10) of the central processing unit (CPU).

14. System according to one of Claims 11 to 13, **characterised in that** a "general history" counter corresponds to the third indicator, said counter being stored in the memory (10) of the central processing unit (CPU).

15. System according to Claim 12, **characterised in that** the dialogue level counter (Cniv) can take values ranging from 0 to 4.

16. System according to Claim 13, **characterised in that** the non-understanding counter (Cnu) can take values ranging from 0 to a value exceeding its maximum stored value (NUmax), which is 2.

17. System according to Claim 13, **characterised in that** the non-response counter (Cnr) can take values ranging from 0 to a value exceeding its maximum stored value (NRmax), which is 2.

18. System according to Claim 14, **characterised in that** the general history counter (Cgh) can take values ranging from 0 to a value exceeding its maximum stored value (GHmax), which is 3.

19. Use of the voice system according to Claims 8 to 18 in the field of mobile telephony.
